# EUROPÄISCHE PATENTSCHRIFT

(11) **EP 2 362 017 B1**
(45) Veröffentlichungstag und Bekanntmachung des Hinweises auf die Patenterteilung: **30.03.2016**
(21) Anmeldenummer: 11001415.6
(22) Anmeldetag: 21.02.2011
(51) Int. Cl.: E01B 7/12, F16B 5/02

(54) **Verbindungselement und Anordnung mit einem Verbindungselement**
Connection element and assembly with a connection element
Elément de liaison et agencement doté d'un élément de liaison

(30) Priorität: 19.02.2010 DE 102010008708; 15.04.2010 DE 102010015235
(43) Veröffentlichungstag der Anmeldung: 31.08.2011
(73) Patentinhaber: Künstler Bahntechnik GmbH, 59439 Holzwickede (DE); Riecken Maschinenbau GmbH, 49565 Bramsche (DE); Heinrich Krug GmbH & Co. KG, 44145 Dortmund (DE)
(72) Erfinder: Brackmann, Heinz, 44149 Dortmund (DE)
(74) Vertreter: Von Rohr Patentanwälte Partnerschaft mbB

(56) Entgegenhaltungen:
- EP-A2- 2 103 738
- DE-A1- 10 311 113
- DE-A1- 10 326 005
- DE-U1-202004 016 709
- GB-A- 191 107 781
- US-A1- 2007 051 851

## Beschreibung

Die Erfindung betrifft ein Verbindungselement ausgebildet zur Befestigung eines auswechselbaren Einsatzes in einem Weichenherzstück mit den Merkmalen des Oberbegriffs von Patentanspruch 1. Darüberhinaus betrifft die vorliegende Erfindung eine Anordnung mit einem über wenigstens ein Verbindungselement an einem Weichenherzstückgrundkörper auswechselbar befestigten Einsatz, weiter insbesondere aus hochverschleißfestem Sonderbaustahl mit sehr guter Schweißeignung, mit den Oberbegriffsmerkmalen von Patentanspruch 5.

Aus der GB-A-191107781 ist ein Verbindungselement mit einem Gewindebolzen und mit einer Mutter bekannt, wobei der Gewindebolzen an einem Ende einen ersten Gewindeabschnitt und an dem anderen Ende einen zweiten Gewindeabschnitt für die Mutter aufweist, wobei die Mutter auf der außenliegenden Stirnseite einen Angriffsabschnitt für ein Werkzeug zum Aufschrauben auf den zweiten Gewindeabschnitt aufweist.

Aus der EP-B-2103738 ist ein Herzstück einer Weiche bekannt, das einen externen Teil, der mit Anschlussschienen anknüpft, und einen internen Teil mit einer Kreuzung umfasst. Der interne Teil ist in eine Aussparung des externen Teils eingesetzt und mit dem externen Teil trennbar verbunden. Der externe Teil und der interne Teil sind mit Einlegestücken trennbar verbunden, die in Spalten zwischen den Seitenwänden des externen Teils und länglichen Einschnitten in den Seitenwänden des internen Teils versenkt sind. Die Einlegestücke weisen Löcher für Schrauben auf, deren Muttern in auf dem Boden der Aussparung des externen Teils angebrachte geformte Einschnitte eingelegt sind und an aus dem externen Teil führende Montagelöcher anknüpfen. Die vorgenannten Schrauben sind in die genannten Muttern eingeschraubt und nachgespannt, so dass die Position des internen Teils abgesichert wird. Die zuvor beschriebene Verbindung zwischen dem externen Teil und dem internen Teil ist konstruktiv aufwendig ausgebildet und vielteilig, was bei der Montage und Demontage von Nachteil ist. Im Übrigen ist der Ausbau des internen Teils für einen Austausch nicht in einfacher Weise möglich, wobei sich das interne Teil nicht ohne weiteres vom externen Teil an- bzw. abheben lässt. Schließlich ist die Montage und Demontage des internen Teils zeitintensiv und arbeitsaufwendig.

Aus dem Stand der Technik ist bekannt, dass die Unterbrechung der Fahrfläche und Fahrkante insbesondere im Herzstückbereich zu einer erhöhten Stoßbelastung, unruhigem Fahrverlauf und einer Geräuschentwicklung führt. Deshalb findet der größte Verschleiß einer Weiche im Überlaufbereich des Herzstückes statt. Hier treffen Maximalverschleiß und Neuzustand aufeinander. Der schweißtechnischen Instanzsetzung von Herzstücken sind dabei physikalische Grenzen gesetzt, die bei drei- bis fünfmaligem Auftragsschweißen liegen. Zudem können die Arbeiten häufig nur unter widrigen Umständen in nächtlichen Betriebs- oder Sperrpausen durchgeführt werden. Aus diesem Grund werden im Überlaufbereich des Herzstückes Einsätze eingesetzt, die austauschbar sind und mit Klammerelementen an dem Herzstück befestigt werden. Die Klammern stellen sicher, dass die bei der Überfahrung auftretenden Kräfte unmittelbar in die Herzstückgrundkörper eingeleitet werden, ohne auf die Schraubverbindung der Befestigungselemente zu wirken. Herzstückkonstruktionen der vorgenannten Art gewährleisten eine hohe Verschleißfestigkeit im Überlaufbereich und werden erfolgreich in höchstbelasteten Bereichen eingesetzt.

Zum Schutz der Klammern ist ein Schutzkasten mit Deckel vorgesehen. Der Schutzkasten weist einen relativ großen Platzbedarf auf. Im Übrigen ist die Verbindung der Ein- bzw. Aufsätze mit dem Herzstückgrundkörper über die in dem Schutzkasten angeordneten Klammern konstruktiv aufwendig. Zum Austausch der Einsätze ist es erforderlich, den Schutzkasten von oben her zu öffnen und die Klammern zu lösen, Unterhalb des Einsatzes befinden sich zu diesem Zweck Schrägen, an die Werkzeuge angesetzt werden, so dass der Einsatz nach oben hin gedrückt werden kann.

Darüber hinaus sind aus dem Stand der Technik Ausführungsformen bekannt, bei denen es möglich ist, den Einsatz direkt von oben her mit dem Herzstückgrundkörper zu verschrauben. Die Verschraubung von oben her hat allerdings den Nachteil, dass die Schrauben einer erhöhten Belastung beim Überfahren ausgesetzt werden. Nach dem Lösen der Schrauben ist es in der Regel nur schwer möglich, den Einsatz für einen Austausch abzuheben.

Aufgabe der vorliegenden Erfindung ist es, ein Verbindungselement und eine Anordnung jeweils der eingangs genannten Art zur Verfügung zu stellen, mit denen es in einfacher Weise möglich ist, einen Einsatz für ein Weichenherzstück an einem Herzstückgrundkörper des Herzstücks zu befestigen. Darüber hinaus soll auch der Ausbau des Einsatzes für einen Austausch in einfacher Weise möglich sein, wobei der Einsatz leicht vom Herzstückgrundkörper an- bzw. abhebbar sein soll. Die Verbindung zwischen dem Einsatz und dem Herzstückgrundkörper soll konstruktiv einfach aufgebaut und wartungsarm sein. Schließlich soll sich die Verbindung zwischen dem Einsatz und dem Herzstückgrundkörper durch einen geringen Platzbedarf auszeichnen,

Die vorgenannten Aufgaben sind durch ein Verbindungselement mit den Merkmalen von Anspruch 1 und durch eine Anordnung mit den Merkmalen von Anspruch 5 gelöst. Vorteilhafte Ausgestaltungen sind in den Unteransprüchen beschrieben.

Erfindungsgemäß sind bei einem Verbindungselement ein Gewindebolzen und eine Mutter vorgesehen, wobei der Gewindebolzen an einem Ende einen ersten Gewindeabschnitt zum Einschrauben in den Herzstückgrundkörper und an dem anderen Ende einen zweiten Gewindeabschnitt für die Mutter aufweist, wobei die Mutter nach dem Aufsetzen des Einsatzes auf den Herzstückgrundkörper von oben durch eine Bohrung im Einsatz auf den zweiten Gewindeabschnitt aufschraubbar ist, um den Einsatz gegenüber dem Untergrund zu verspannen. Zum Anheben des Einsatzes vom Herzstückgrundkörper weist der Gewindebolzen im Bereich zwischen den Gewindeabschnitten wenigstens einen Hebeabschnitt auf, wobei der Gewindebolzen die Bohrung im verspannten Befestigungszustand des Einsatzes lediglich teilweise durchsetzt und die Mutter zumindest im Wesentlichen innerhalb der Bohrung angeordnet bzw. in die Bohrung eingeschraubt ist und wobei eine außenliegende Stirnfläche der Mutter im Befestigungszustand zumindest randseitig mit einer Außenfläche des Einsatzes auf der Oberseite des Einsatzes ausgefluchtet ist. Der Gewindebolzen kann im Bereich des Hebeabschnitts eine größere Erstreckung in radialer Richtung aufweisen als im Bereich des zweiten Gewindeabschnitts. Die erfindungsgemäße Anordnung weist dementsprechend einen Einsatz mit wenigstens einer in axialer Richtung wirkenden (radialen) Anschlagfläche für den Hebeabschnitt des Gewindebolzens auf, so dass es durch Herausschrauben des Gewindebolzens aus dem Herzstückgrundkörper möglich ist, den Einsatz gegenüber dem Herzstückgrundkörper anzuheben.

Die Befestigung des Einsatzes an dem Herzstückgrundkörper erfolgt somit über den Gewindebolzen und die auf den Gewindebolzen aufgeschraubte Mutter. Dabei liegt im Befestigungszustand der Einsatz vorzugsweise ausschließlich auf dem Herzstückgrundkörper auf und wird somit zwischen der Mutter und dem Herzstückgrundkörper verspannt. Beim Herausdrehen des Gewindebolzens tritt dann der Hebeabschnitt am Gewindebolzen mit einer Anschlagfläche an dem Einsatz in Kontakt, so dass ein Formschluss in axialer Richtung gebildet wird, der bei einem weiteren Herausdrehen des Gewindebolzens zum An- bzw. Abheben des Einsatzes vom Herzstückgrundkörper führt. Dadurch sind in einfacher Weise eine Befestigung des Einsatzes mit dem Herzstückgrundkörper und auch das spätere Anheben des Einsatzes vom Herzstückgrundkörper für Wartungsarbeiten oder zum Austausch des Einsatzes möglich. Darüber hinaus ist eine Befestigung des Einsatzes mit dem Herzstückgrundkörper bei geringem Platzbedarf möglich, wobei der Einsatz direkt von oben mit dem Untergrund verschraubt sein kann. Ein Schutzkasten für das Verbindungselement ist nicht erforderlich. Schließlich zeichnet sich die beschriebene Verbindung zwischen dem Einsatz und dem Herzstückgrundkörper durch einen einfachen konstruktiven Aufbau aus und ist bei entsprechender Ausbildung des Verbindungselementes wartungsarm.

Zur Lösung der eingangs genannten Aufgabe sind bei einem Verbindungselement der eingangs genannten Art ein Gewindebolzen und eine Mutter vorgesehen, wobei der Gewindebolzen an einem Ende einen ersten Gewindeabschnitt zum Einschrauben in den Herzstückgrundkörper und an dem anderen Ende einen zweiten Gewindeabschnitt für die Mutter aufweist, wobei die Mutter nach dem Aufsetzen des Einsatzes auf den Herzstückgrundkörper von oben durch eine Bohrung im Einsatz auf den zweiten Gewindeabschnitt aufschraubbar ist, um den Einsatz gegenüber dem Herzstückgrundkörper zu verspannen, wobei die Mutter auf der äußeren Stirnseite einen Angriffsabschnitt für ein Werkzeug zum Aufschrauben auf den zweiten Gewindeabschnitt aufweist, wobei der zweite Gewindeabschnitt einen oberen Angriffsabschnitt für ein Werkzeug zum Herausschrauben des Gewindebolzens und zum Anheben des Einsatzes gegenüber dem Herzstückgrundkörper aufweist und wobei die Mutter den oberen Angriffsabschnitt des Gewindebolzens nach dem Aufschrauben auf den zweiten Gewindeabschnitt des Gewindebolzens nach oben vollflächig überdeckt. Bei dieser Ausführungsform wird das Verbindungselement gebildet durch einen Gewindebolzen und eine Hutmutter, die von oben auf den Gewindebolzen aufgeschraubt wird.

Bei der vorgenannten Ausführungsform lässt sich die Mutter in einem Montagezustand in einfacher Weise auf den Gewindebolzen aufschrauben, wobei über den Angriffsabschnitt der Mutter das zum Festziehen der Mutter erforderliche Drehmoment aufgebracht wird. Nachdem der Einsatz zwischen dem Herzstückgrundkörper und der Mutter fest verspannt ist, wird der Angriffsabschnitt von der Mutter abgetrennt. Der Angriffsabschnitt kann durch Abbrechen oder durch zerspanende Bearbeitung von der Mutter abtrennbar sein. Alternativ kann auch vorgesehen sein, dass der Angriffsabschnitt mit der Mutter (lösbar) verschraubt ist. Dabei kann die Mutter nach dem Abtrennen oder Lösen des Angriffsabschnitts im Befestigungszustand eine im Wesentlichen ebene außenseitige Stirnfläche aufweisen, was insbesondere beim Überfahren der Mutter im Betriebszustand von Vorteil ist und zu einer gleichmäßigen Flächenpressung im Bereich der außenliegenden Stirnfläche der Mutter führt.

Wenngleich das erfindungsgemäße Verbindungselement grundsätzlich zur Befestigung von beliebigen Einsätzen an einem Untergrund eingesetzt werden kann, betrifft die Erfindung ein Verbindungselement zur Befestigung von Einsätzen oder Aufsätzen für Weichenherzstücke, die mit einem Herzstückgrundkörper als Untergrundabschnitt verbunden werden.

Der Angriffsabschnitt der Mutter kann grundsätzlich jede beliebige Form aufweisen, die das Ansetzen eines Werkzeuges zum Aufdrehen der Mutter auf den oberen Gewindeabschnitt des Gewindebolzens zulässt. Beispielsweise wird der Angriffsabschnitt durch einen in axialer Richtung über eine außenliegende Stirnfläche der Mutter überstehenden Fortsatz gebildet. Der Fortsatz kann an seinem freien Ende einen innenliegenden oder außenliegenden Sechskantabschnitt für das Werkzeug aufweisen.

Die Mutter kann eine geschlossene außenliegende Stirnfläche aufweisen, so dass die Mutter im Befestigungszustand die Bohrung im Einsatz im Wesentlichen vollflächig verschließt, was das Eindringen von Schmutz oder Störstoffen in den Bereich der Bohrung verhindert. Bei einer erfindungsgemäßen Anordnung der eingangs genannten Art ist in diesem Zusammenhang vorgesehen, dass die außenliegende Stirnfläche der Mutter im Befestigungszustand, d. h. nach dem Aufschrauben auf den Gewindebolzen und dem Verspannen des Einsatzes, zumindest randseitig mit einer Außenfläche des Einsatzes ausgefluchtet ist. Im Ergebnis ergibt sich eine nach außen geschlossene Oberfläche im Bereich der Verbindung des Einsatzes mit dem Herzstückgrundkörper. Dadurch wird das Eindringen von Fremd- und Störstoffen in die Bohrung weitgehend verhindert.

Im Verbindungsbereich zwischen dem Angriffsabschnitt und der Mutter kann eine Sollbruchstelle vorgesehen sein, so dass der Angriffsabschnitt in einfacher Weise durch Abbrechen von der Mutter lösbar ist. Grundsätzlich ist es natürlich auch möglich, dass der Angriffsabschnitt durch zerspanende Bearbeitung von der Mutter abgetrennt wird. Bei einer anderen Ausführungsform kann vorgesehen sein, dass der Angriffsabschnitt mit der Mutter verschraubt ist. Letztlich muss die Verbindung zwischen dem Angriffsabschnitt und der Mutter eine ausreichende Festigkeit aufweisen, um die Übertragung eines ausreichend großen Drehmoments beim Aufschrauben der Mutter auf den Gewindebolzen und das Verspannen des Einsatzes gewährleisten zu können.

Der zweite Gewindeabschnitt weist vorzugsweise einen oberen Angriffsabschnitt für ein Werkzeug zum Herausschrauben des Gewindebolzens und, vorzugsweise, zum Anheben des Einsatzes gegenüber dem Untergrund auf. Über den Angriffsabschnitt lässt sich der Gewindebolzen mit einem Werkzeug in einfacher Weise und bei geringem Kraftaufwand aus dem Herzstückgrundkörper herausschrauben. Weist der Gewindebolzen einen Hebeabschnitt auf, tritt dieser beim Herausschrauben des Gewindebolzens mit dem darüberliegenden Einsatz in Kontakt, was bei einem weiteren Herausschrauben des Gewindebolzens aus dem Herzstückgrundkörper zum Anheben des Einsatzes führt. Dadurch wird das Auswechseln des Einsatzes vereinfacht.

Im Übrigen kann an dem unteren ersten Gewindeabschnitt des Gewindebolzens ein weiterer unterer Angriffsabschnitt für ein Werkzeug vorgesehen sein, so dass es grundsätzlich auch möglich ist, über eine entsprechende Öffnung im Herzstückgrundkörper den Gewindebolzen von unten aus dem Herzstückgrundkörper herauszuschrauben.

Um das Ansetzen eines Werkzeuges von außen an dem am zweiten Gewindeabschnitt des Gewindebolzens vorgesehenen oberen Angriffsabschnitt zu ermöglichen, kann vorzugsweise vorgesehen sein, dass der obere Angriffsabschnitt des Gewindebolzens erst nach einem Aufbohren der Mutter ausgehend von der äußeren Stirnseite der Mutter zugänglich ist. Die Mutter kann in diesem Zusammenhang aus einem Vollmaterial hergestellt sein und eine Innenbohrung mit einem Innengewinde für den zweiten Gewindeabschnitt des Gewindebolzens aufweisen. Die Innenbohrung erstreckt sich von einer innenliegenden bzw. unteren Stirnfläche der Mutter ausgehend in axialer Richtung nach oben, durchsetzt die Mutter jedoch nicht vollständig, so dass im oberen Randbereich der Mutter ein geschlossener Abschnitt aus einem Vollmaterial verbleibt. Beim Aufbohren der Mutter von außen wird dann ein Bohrloch stirnseitig in die Mutter durch den geschlossenen Abschnitt getrieben, bis der Angriffsabschnitt des Gewindebolzens freiliegt.

Nach dem Aufbohren kann die Mutter in einem Demontagezustand eine durchgehende Öffnung aufweisen, wobei die Öffnung gebildet wird durch einen sich von einer außenliegenden Stirnseite der Mutter nach innen erstreckenden ersten oberen Bohrlochabschnitt und einen sich von der innenliegenden Stirnseite der Mutter bis zum ersten Bohrlochabschnitt erstreckenden zweiten unteren Bohrlochabschnitt, wobei der erste Bohrlochabschnitt einen größeren Durchmesser als der zweite Bohrlochabschnitt und der zweite Bohrlochabschnitt ein Innengewinde für den zweiten Gewindeabschnitt des Gewindebolzens aufweist. Im aufgeschraubten Zustand greift der zweite Gewindeabschnitt des Gewindebolzens dann in den ersten Bohrlochabschnitt ein, so dass es in einfacher Weise möglich ist, ein Werkzeug von oben über den ersten Bohrlochabschnitt an dem oberen Angriffsabschnitt des Gewindebolzens anzusetzen und den Gewindebolzen herauszuschrauben.

Grundsätzlich kann die Mutter auch bereits im Befestigungszustand, das heißt, vor einem Aufbohren von oben, eine durchgehende Öffnung der oben beschriebenen Art aufweisen, wobei dann eine Abdeckung oder Kappe vorgesehen sein kann, die von außen mit der Mutter durch eine Schraubverbindung oder eine Rast- oder Klemmverbindung verbunden ist. Die Abdeckung oder Kappe kann einen Angriffsabschnitt für ein Werkzeug zum Aufschrauben der Mutter aufweisen. Darüber hinaus kann ein (weiterer) Angriffsabschnitt an der Kappe bzw. der Abdeckung vorgesehen sein, um die Kappe bzw. Abdeckung von der Mutter abschrauben bzw. abziehen zu können. Nach dem Lösen der Verbindung zwischen der Kappe bzw. der Abdeckung und der Mutter ist dann über den ersten Bohrlochabschnitt ein Zugriff von außen auf den Angriffsabschnitt des Gewindebolzens möglich. Als (weiterer) Angriffsabschnitt kann beispielsweise eine schlitz- oder sechskantförmige Einsenkung in der Kappe bzw. der Abdeckung vorgesehen sein.

Die vorgenannten Aspekte und Merkmale der vorliegenden Erfindung sowie die nachfolgend anhand der Zeichnung beschriebenen Aspekte und Merkmale der vorliegenden Erfindung können unabhängig voneinander und/oder in einer beliebigen Kombination verwirklicht werden, auch wenn dies nicht im einzelnen beschrieben ist. Weitere Vorteile, Merkmale, Eigenschaften und Aspekte der vorliegenden Erfindung ergeben sich aus der folgenden Beschreibung einer bevorzugten Ausführungsform anhand der Zeichnung. Es zeigen:
- Fig. 1: eine schematische Teilquerschnittsansicht einer erfindungsgemäßen Anordnung mit einem erfindungsgemäßen Verbindungselement zur Befestigung eines Einsatzes für ein Herzstück einer Weiche an einem Herzstückgrundkörper im Montagezustand,
- Fig. 2: die in Fig. 1 dargestellte Anordnung, wobei das Verbindungselement in einem Befestigungszustand dargestellt ist,
- Fig. 3: die in Fig. 1 dargestellte Anordnung, wobei das Verbindungselement in einem Demontagezustand dargestellt ist,
- Fig. 4: die Darstellung aus Fig. 3 in einer vergrößerten Ansicht,
- Fig. 5: eine Querschnittsansicht einer weiteren Ausführungsform einer erfindungsgemäßen Anordnung mit einem erfindungsgemäßen Verbindungselement zur Befestigung eines Einsatzes für ein Herzstück einer Weiche an einem Herzstückgrundkörper im Montagezustand,
- Fig. 6: die in Fig. 1 dargestellte Anordnung, wobei das Verbindungselement in einem Befestigungszustand dargestellt ist,
- Fig. 7: die in Fig. 1 dargestellte Anordnung, wobei das Verbindungselement in einem Demontagezustand dargestellt ist,
- Fig. 8: eine Seitenansicht eines Gewindebolzens der in den Fig. 5 bis 7 dargestellten Anordnung,
- Fig. 9: eine Mutter für den in Fig. 8 dargestellten Gewindebolzen und
- Fig. 10: eine schematische Darstellung eines Herzstücks mit einem auswechselbaren, von oben verschraubten Einsatz.

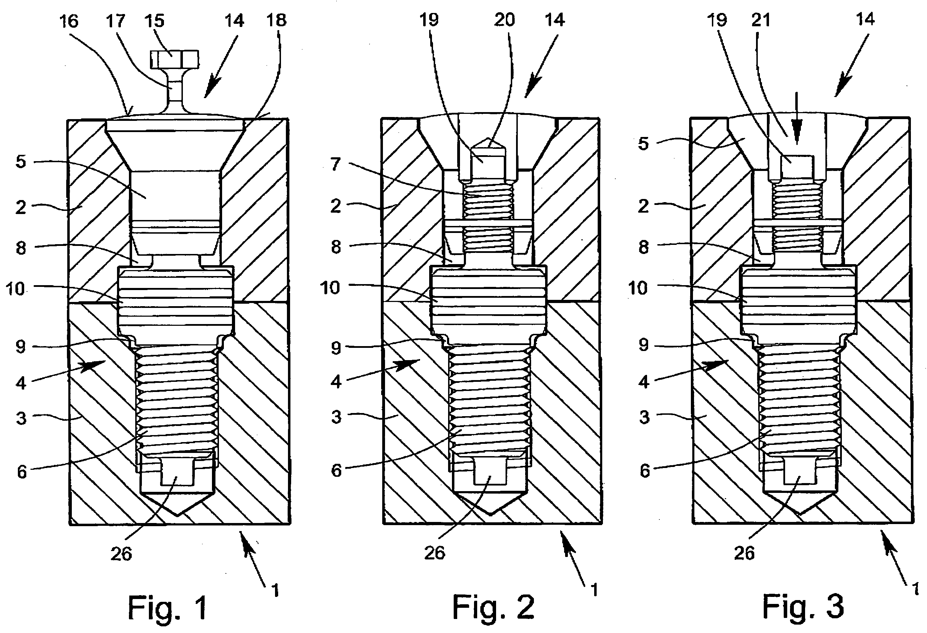

In den Fig. 1 bis 4 ist eine Anordnung 1 mit einem Verbindungselement zur Befestigung eines lediglich schematisch dargestellten Einsatzes 2 bzw. Aufsatzes für ein Weichenherzstück an einem Herzstückgrundkörper 3 als Untergrundabschnitt dargestellt. Darüber hinaus ist das Verbindungselement zum Anheben des Einsatzes 2 vom Herzstückgrundkörper 3 ausgebildet. Es versteht sich, dass das Verbindungselement grundsätzlich auch zur Befestigung von beliebigen Schienenteilen an einem Untergrundabschnitt vorgesehen sein kann.

Das Verbindungselement weist einen Gewindebolzen 4 und eine Mutter 5 auf. Der Gewindebolzen 4 weist an einem unteren Ende einen ersten Gewindeabschnitt 6 zum Einschrauben in den Herzstückgrundkörper 3 und an dem anderen oberen Ende einen zweiten Gewindeabschnitt 7 für die Mutter 5 auf. Die Mutter 5 lässt sich nach dem Aufsetzen des Einsatzes 2 auf den Herzstückgrundkörper 3 von oben durch eine Bohrung 8 im Einsatz 2 auf den den Einsatz 2 teilweise durchsetzenden zweiten Gewindeabschnitt 7 aufschrauben. Dadurch wird der Einsatz 2 gegenüber dem Herzstückgrundkörper 3 verspannt bzw, an dem Herzstück 3 befestigt. Wie sich aus Fig. 1 ergibt, ist in dem Herzstückgrundkörper 3 ein Bohrloch 9 mit einem Innengewindeabschnitt vorgesehen, in den sich der Gewindebolzen 4 mit dem ersten Gewindeabschnitt 6 einschrauben lässt. Der Gewindebolzen 4 weist in diesem Zusammenhang einen mittleren Hebeabschnitt 10 auf, der bei der dargestellten Ausführungsform hälftig in eine entsprechende Aufweitung des Bohrlochs 9 an der Oberseite des Herzstückgrundkörpers 3 abgesenkt ist. Im verspannten Zustand bzw. im Betriebszustand liegt der Einsatz 2 im Wesentlichen vollflächig lediglich auf dem Herzstückgrundkörper 3 auf, wobei zwischen dem Einsatz 2 und dem Hebeabschnitt 10 ein Freiraum 11 vorgesehen ist.

Beim Herausdrehen des Gewindebolzens 4 aus dem Bohrloch 9 tritt eine obere Stirnfläche 12 des Hebeabschnitts 10 mit einer Schulter 13 des Einsatzes 2 in Kontakt, was bei einem weiteren Herausdrehen des Gewindebolzens 10 zum Anheben des Einsatzes 2 vom Herzstückgrundkörper 3 führt. Eine innenliegende Kontaktfläche 13a an der Schulter 13 wirkt dabei mit einem randnahen Bereich des Hebeabschnitts 10 zusammen. Die Schulter 13 wird durch eine entsprechende Durchmessererweiterung der Bohrung 8 auf der innenliegenden Stirnseite des Einsatzes 2 gebildet. Im Befestigungszustand, der in Fig. 2 dargestellt ist, ist in etwa die obere Hälfte des Hebeabschnitts 10 in der Bohrung 8 im Bereich der Durchmessererweiterung aufgenommen. Im Befestigungszustand liegt der Einsatz 2 jedoch vorzugsweise nicht auf der oberen Stirnfläche 12 des Gewindebolzens 4, sondern lediglich auf dem Herzstückgrundkörper 3 auf.

Wie sich aus Fig. 1 ergibt, weist die Mutter 5 in einem Montagezustand auf der Oberseite 14 einen Angriffsabschnitt 15 für ein Werkzeug zum Übertragen eines ausreichend großen Drehmoments beim Aufschrauben der Mutter 5 auf den zweiten Gewindeabschnitt 7 auf, wobei der Angriffsabschnitt 15 lösbar mit der Mutter 5 verbunden ist. Der Angriffsabschnitt 15 wird durch einen Fortsatz an der Mutter 5 gebildet, wobei der Angriffsabschnitt 15 in axialer Richtung über eine außenliegende Stirnfläche 16 der Mutter übersteht. Dadurch lässt sich ein Werkzeug in einfacher Weise auf den als Sechskant ausgebildeten Angriffsabschnitt 15 aufsetzen. Der Angriffsabschnitt 15 ist über einen stegförmigen Wellenabsatz 17 mit der Mutter 5 verbunden, wobei es sich versteht, dass der Wellenabsatz 17 eine ausreichende Drehfestigkeit aufweist, um die Übertragung einer ausreichenden Spannkraft beim Aufschrauben der Mutter 5 auf den oberen Gewindeabschnitt 7 sicherzustellen.

Der Angriffsabschnitt 15 lässt sich durch Abbrechen von der Mutter 5 trennen. Hier kann eine Sollbruchstelle im Verbindungsbereich des Angriffsabschnitts 15 mit der außenliegenden Stirnfläche 16 der Mutter 5 vorgesehen sein. Zur Herstellung einer planen Oberfläche auf der Oberseite 14 der Mutter 5 kann eine spanende Nachbearbeitung der Sollbruchstelle vorgesehen sein.

Wie sich insbesondere aus Fig. 2 ergibt, ist die außenliegende Stirnfläche 16 der Mutter 5 im Befestigungszustand zumindest randseitig mit einer Außenfläche 18 des Einsatzes 2 ausgefluchtet. Hier kann die außenliegende Stirnfläche 16 leicht nach außen gewölbt sein oder auch im Wesentlichen in der Ebene der Außenfläche 18 liegen. Dadurch werden die Belastungen beim Überfahren des Verbindungselementes gering gehalten. Im Übrigen wird das Eindringen von Schmutz und Fremdstoffen, die eine spätere Demontage der Verbindungselementes erschweren könnten, in den Bereich der Bohrung 8 verringert.

Die Mutter 5 weist im Montage- und Betriebszustand eine geschlossene Oberfläche auf. Dadurch wird ein Angriffsabschnitt 19 an dem Gewindebolzen 4 gegen Verschmutzung oder Beschädigung geschützt. Der Angriffsabschnitt 19 am zweiten Gewindeabschnitt 7 ist zum Herausschrauben des Gewindebolzens 4 mit einem entsprechenden Werkzeug und, vorzugsweise, zum Anheben des Einsatzes 2 gegenüber dem Herzstückgrundkörper 3 ausgebildet. Der Angriffabschnitt 19 kann als Außensechskant ausgebildet sein. Über den Außensechskant lässt sich das Lösemoment aufbringen. Um das Herausdrehen des Gewindebolzens 4 aus dem Herzstückgrundkörper 3 zu ermöglichen, ist bei der dargestellten Ausführungsform vorgesehen, die Mutter 5 auf der Oberseite 14 aufzubohren, was in Fig. 3 schematisch dargestellt ist. Dabei wird ein Bohrloch 21 beginnend von der Oberseite 14 so tief in die Mutter 5 abgesenkt, bis der Angriffsabschnitt 19 frei liegt. Hier kann ein Ringbohrer eingesetzt werden, um eine Bohrung 20, die im unteren Bereich ein Innengewinde für den oberen Gewindeabschnitt 7 des Gewindebolzens 4 aufweist, entsprechend aufzuweiten. In Fig. 3 ist die Mutter 5 nach dem Aufbohren dargestellt. Es ist nun in einfacher Weise möglich, von oben bzw. außen ein Werkzeug am Angriffsabschnitt 19 anzusetzen, um den Gewindebolzen 4 aus dem Herzstückgrundkörper 3 herauszuschrauben und damit den Einsatz 2 vom Herzstückgrundkörper 3 anzuheben.

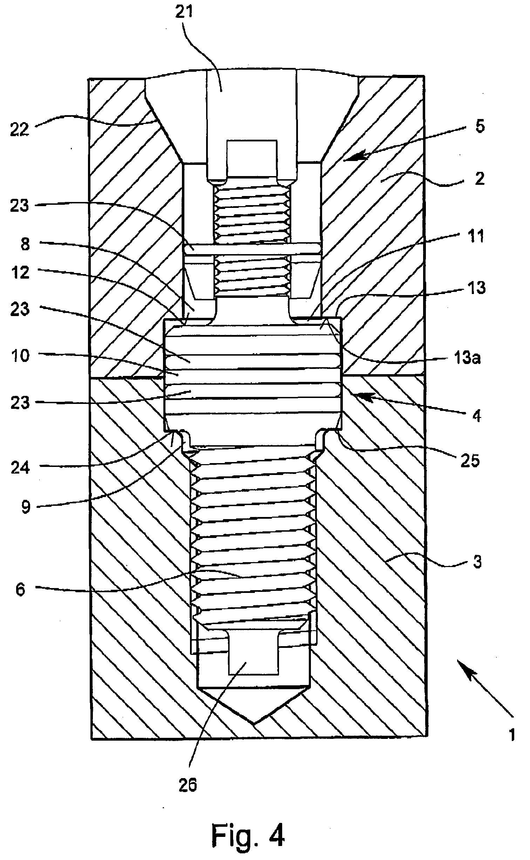

Wie sich aus Fig. 4 ergibt, weist die Mutter einen oberen Konusabschnitt 22 auf, so dass die Übertragung der erforderlichen Spannkraft und die Zentrierung der Mutter 5 im Bohrloch 8 sowie eine ausreichende Abdichtung des Bohrlochs 8 gegenüber der Umgebung gleichermaßen gewährleistet sind.

Darüber hinaus sind Dichtmittel 23 vorgesehen, um Dichtflächen zu dem Einsatz 2 und zu dem Herzstückgrundkörper 3 zu schaffen, so dass das Eindringen von Wasser, Tausalz und dergleichen verhindert wird. Dies ermöglicht ein problemloses Lösen des Verbindungselementes auch nach längerer Liegedauer.

Der Hebeabschnitt 10 liegt nach einem vollständigen Einschrauben mit einer unteren Stirnfläche 24 auf einer Schulter 25 des Herzstückgrundkörpers 3 auf, was zu einer sicheren Abstützung am Herzstückgrundkörper 3 beiträgt.

Schließlich kann der untere Gewindeabschnitt 6 einen weiteren Angriffsabschnitt 26 aufweisen, der ebenfalls als Außensechskant ausgebildet sein kann. Um ein Werkzeug von unten an dem weiteren Angriffsabschnitt 26 ansetzen zu können, kann dann vorgesehen sein, das Bohrloch 9 durch Aufbohren von unten bzw, außen freizulegen.

Je nach Steigung des Gewindes am oberen zweiten Gewindeabschnitt 7 und am unteren ersten Gewindeabschnitt 6 löst sich bei Übertragung eines Drehmomentes auf den Gewindebolzen 4 die Mutter 5 oder der Gewindebolzen 4 früher. Der Gewindebolzen 4 kann dabei oben ein Feingewinde und unten ein Regelgewinde aufweisen.

Zur Befestigung des Einsatzes 2 mit Schrauben am Herzstückgrundkörper 3 ist es nicht unbedingt erforderlich, dass alle Schrauben in der Art der beschriebenen Verbindungselemente ausgestaltet sind. Bevorzugt sind beispielsweise bei sechs oder acht Schrauben nur die beiden ersten und die beiden letzten in der Art der beschriebenen Verbindungselemente ausgestaltet. Bei der Demontage muss dann so vorgegangen werden, dass die einzelnen Schrauben bzw. die Gewindebolzen 4 der Verbindungselemente langsam immer im Wechsel nur für ein kleines Stück herausgedreht werden.

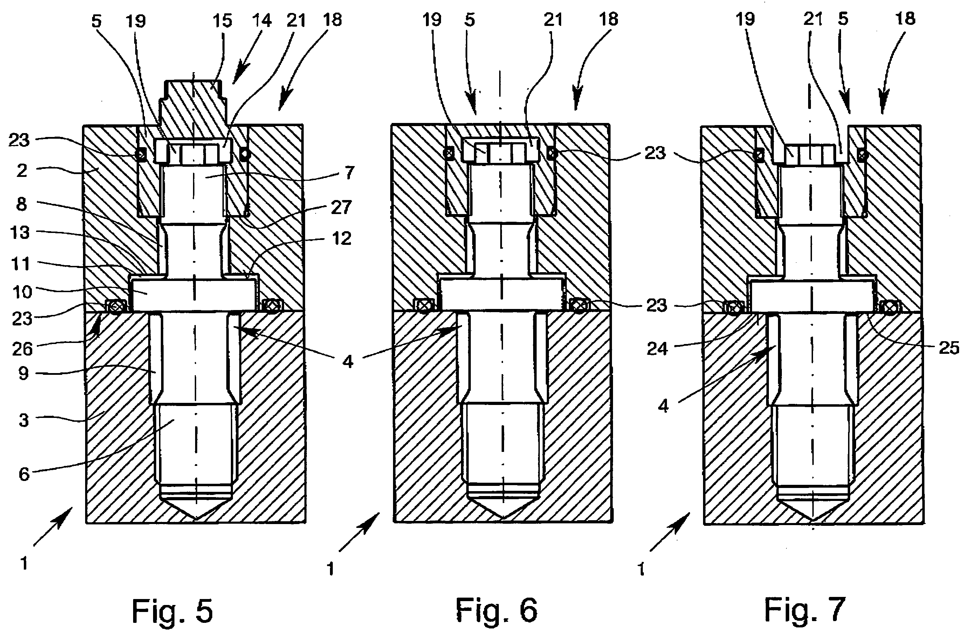

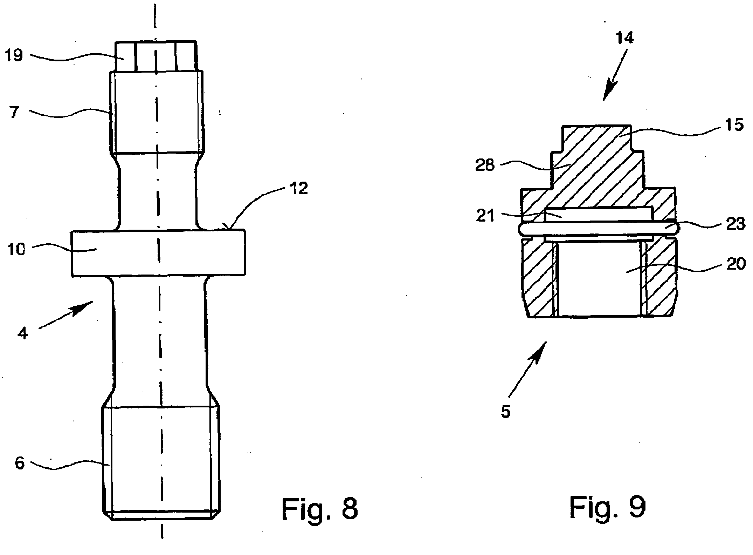

In den Fig. 5 bis 7 ist eine weitere Ausführungsform einer Anordnung 1 zur Befestigung eines Einsatzes 2 für ein Weichenherzstück an einem Herzstückgrundkörper 3 dargestellt. In Fig. 8 ist ein Gewindebolzen 4 der in den Fig. 5 bis 7 dargestellten Anordnung 1 und in Fig. 9 eine Befestigungsmutter 5 für den Gewindebolzen 4 aus Fig. 8 dargestellt. In den Fig. 1 bis 4 der Zeichnung und in den Fig. 5 bis 9 werden für gleiche oder ähnliche Teile dieselben Bezugszeichen verwendet. Damit soll angedeutet werden, dass entsprechend oder vergleichbare Eigenschaften und Vorteile erreicht werden, auch wenn eine wiederholte Beschreibung dieser Teile unterbleibt. Nachfolgend wird lediglich auf die Unterschiede der dargestellten Anordnungen 1 näher eingegangen.

Bei der in den Fig. 5 bis 7 dargestellten Anordnung 1 ist der Gewindebolzen 4 als Systemschraube mit seinem unteren Ende in den blockartigen Herzstückgrundkörper 3 bis zum Hebeabschnitt 10 eingeschraubt und liegt dabei im Bereich des Hebeabschnitts 10 auf dem Herzstückgrundkörper 3 auf, wobei der Hebeabschnitt 10 im Unterschied zu der in den Fig. 1 bis 4 dargestellten Anordnung 1 jedoch nicht in den Herzstückgrundkörper 3 abgesenkt ist. Die Unterseite des Hebeabschnitts 10 wirkt als Auflagesitz für den Gewindebolzen 4.

Der Herzstückeinsatz 2 weist eine durchgehende Bohrung 8 für den oberen Teil des Gewindebolzens 4 auf, wobei die Bohrung 8 eine erste Durchmessererweiterung im oberen Bereich ausgehend von einer Oberseite 18 des Einsatzes 2 und eine zweite Durchmessererweiterung im unteren Bereich ausgehend von einer Unterseite 26 des Einsatzes 2 aufweist. Dadurch werden ringförmige Schultern 13 und 27 an dem Einsatz 2 ausgebildet. Durch die Bohrung 8 ist es möglich, den Einsatz 2 von oben auf den Gewindebolzen 4 aufzusetzen und in den Herzstückgrundkörper einzusetzen, bis der Einsatz 2 auf seiner Unterseite 26 gegen den Herzstückgrundkörper 3 anliegt. Dabei ist stets ein Freiraum 11 zwischen der unteren Schulter 13 des Einsatzes 2 und dem Hebeabschnitt 10 vorhanden. Zum Verspannen bzw. Befestigen des Einsatzes 2 an dem Herzstückgrundkörper 3 wird eine Hutmutter 5 nach dem Aufsetzen des Einsatzes 2 auf den Herzstückgrundkörper 3 von oben auf den Gewindebolzen 4 aufgeschraubt, bis sie gegen die obere Schulter 27 des Einsatzes 2 zur Anlage kommt und bei weiterem Aufschrauben den Einsatz 2 gegen den Herzstückgrundkörper 3 verspannt. Somit ist eine dauerhafte Befestigung des Einsatzes 2 sichergestellt. Beim Herausdrehen des Gewindebolzens 4 um einige Millimeter zum Anheben des Einsatzes 2 tritt eine obere Stirnfläche 12 des Hebeabschnitts 10 mit der unteren Schulter 13 des Einsatzes 2 in Kontakt, was bei einem weiteren Herausdrehen des Gewindebolzens 10 zum Anheben des Einsatzes 2 vom Herzstückgrundkörper 3 führt. Die Oberseite des Hebeabschnitts 10 wirkt als Anlagesitz für den Einsatz 2.

Wie sich aus den Fig. 5 bis 7 weiter ergibt, ist die Höhe des Hebeabschnitts 10 geringer als die Tiefe des Bohrlochs 8 im Bereich der unteren zweiten Durchmessererweiterung. Dadurch wird sichergestellt, dass es zu keinem Zeitpunkt zu einem Aufliegen des Einsatzes 2 auf dem Hebeabschnitt 10 des Gewindebolzens 4 kommen kann.

Um Dichtflächen zwischen der Mutter 5 und dem Einsatz 2 einerseits und zwischen dem Einsatz 2 und dem Herzstückgrundkörper 3 andererseits zu schaffen, sind O-Ringe als Dichtmittel 23 gegen eindringendes Wasser vorgesehen.

Wie sich insbesondere aus Fig. 9 ergibt, weist die Hutmutter 5 im Montagezustand auf der Oberseite 14 einen mittleren Zapfen 28 als Schlüsselansatz mit einem Angriffsabschnitt 15 auf, wobei der Angriffsabschnitt 15 als Sechskant ausgebildet sein kann. Die Mutter 5 weist zudem eine Bohrung 20 mit einem Innengewindeabschnitt auf, was das Aufschrauben auf den Gewindeabschnitt 7 des Gewindebolzens 4 ermöglicht. Der Außendurchmesser der Mutter 5 ist dabei kleiner als der Innendurchmesser der Bohrung 8 im Bereich der oberen ersten Durchmessererweiterung des Einsatzes 2, was das einfache Aufschrauben der Mutter 5 auf den Gewindebolzen 4 zulässt. Im Befestigungszustand liegt dann die Mutter 5 von oben gegen die obere Schulter 27 des Einsatzes 2 an, wodurch der Einsatz 2 durch den in den Herzstückgrundkörper 3 eingeschraubten Gewindebolzen 4 gegen den Herzstückgrundkörper 3 verspannt wird.

Wie sich aus Fig. 6 ergibt, kann die Hutmutter 5 im Befestigungszustand nach dem Abarbeiten des Zapfens 28 mit dem Einsatz 2 ausgefluchtet sein, so dass die Hutmutter 5 und die Oberkante des Einsatzes 2 eine ebene Oberfläche bilden. Die Höhe der Mutter ist dementsprechend an die Tiefe des Bohrlochs in dem Einsatz 2 bis zum Erreichen der oberen Schulter 27 angepasst.

Die Bohrung 20 der Mutter 5 weist eine Durchmessererweiterung am oberen Ende auf, so dass es zur Demontage des Gewindebolzens 4 nach dem Abtrennen des Zapfens 28 durch spanende Bearbeitung der Mutter 5 in einfacher Weise möglich ist, in die Mutter 5 ausgehend von der Oberseite 14 eine Kernbohrung einzubringen und anschließend einen Steckschlüssel als Werkzeug auf einen beispielsweise als Sechskant ausgebildeten Angriffsabschnitt 19 am Schraubenkopf des Gewindebolzens 4 anzusetzen, um den Gewindebolzen 4 aus dem Herzstückgrundkörper 3 herauszuschrauben und damit den Einsatz 2 vom Herzstückgrundkörper 3 anzuheben. Bei einer erneuten Montage muss lediglich die Hutmutter 5 ersetzt werden.

Es versteht sich, dass die Merkmale der dargestellten Anordnungen 1 bedarfsweise miteinander kombiniert werden können, auch wenn dies nicht im Einzelnen beschrieben ist.

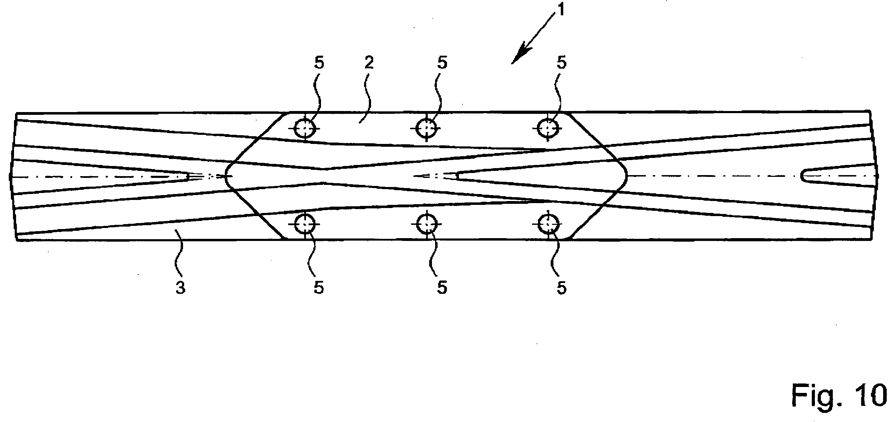

In Fig. 10 ist schematisch ein Herzstückgrundkörper 3 mit einem auswechselbaren, von oben verschraubten Einsatz 2 dargestellt, die eine Anordnung 1 bilden. Der Herzstückgrundkörper 3 besteht aus einem durchgehend geschmiedeten Block aus einem Kohlenstoffstahl. Der auswechselbare Einsatz 2 besteht aus hochverschleißfestem Sonderbaustahl mit sehr guter Schweißeignung und einer Festigkeit von vorzugsweise ca. 1200 bis 1300 MPa und/oder einer Härte bei Raumtemperatur von vorzugsweise ca. 400 HBW (gemäß DIN EN ISO 6506). Der Einsatz 2 weist oberseitig eingearbeitete Fahr- und Führungsrillen auf. Der Einsatz 2 ist so gestaltet, dass er von oben auswechselbar ist. Hierzu werden die oben anhand der Fig. 1 bis 9 beschriebenen Verbindungselemente eingesetzt. Das beschriebene Befestigungssystem stellt sicher, dass die bei der Überfahrung auftretenden Kräfte unmittelbar in den Herzstückgrundkörper 3 eingeleitet werden. Die Herzstückkonstruktion gewährleistet eine hohe Verschleißfestigkeit im Überlaufbereich und kann vorzugsweise in höchstbelasteten Bereichen eingesetzt werden.

Gemäß Fig. 10 ist der Einsatz 2 mit dem Herzstückgrundkörper 3 über sechs Verbindungselemente befestigt, die im Befestigungszustand dargestellt sind. Hierbei bilden die Muttern 5 (nach dem Abtrennen der Angriffsabschnitte 15) und der Einsatz 2 eine einheitliche Oberfläche. Zum Demontieren wird in jede Mutter 5 mittig eine Kernbohrung von der Außenseite ausgehend eingebracht, um mit einem Steckschlüssel die Gewindebolzen 4 aus dem Herzstückgrundkörper 3 herausschrauben zu können und damit den Einsatz 2 vom Herzstückgrundkörper 3 anzuheben, was den Austausch wesentlich vereinfacht.

## Patentansprüche

1. Verbindungselement zur Befestigung eines auswechselbaren Einsatzes (2) in einem Weichenherzstück, mit einem Gewindebolzen (4), umfassend einen ersten Gewindeabschnitt (6) an einem Ende, einen zweiten Gewindeabschnitt (7) an dem anderen Ende mit einem oberen Angriffsabschnitt (19), und eine Mutter (5) mit einem Angriffsabschnitt (15) auf einer außenliegenden Stirnseite (14) für ein Werkzeug zum Aufschrauben auf den zweiten Gewindeabschnitt (7), **dadurch gekennzeichnet, dass** das Verbindungselement zum Anheben des Einsatzes (2) ausgebildet ist, wobei der Gewindebolzen (4) einen Hebeabschnitt (10) im Bereich zwischen den Gewindeabschnitten (6, 7) aufweist, wobei der Hebeabschnitt (10) zum Anheben des Einsatzes (2) durch Herausdrehen des Gewindebolzens (4) aus dem Herzstückgrundkörper (3) ausgebildet ist, wobei beim Herausdrehen des Gewindebolzens (4) der Hebeabschnitt (10) am Gewindebolzen (4) mit einer Anschlagfläche des Einsatzes (2) in Kontakt tritt, so dass ein Formschluss in axialer Richtung gebildet wird, der bei einem weiteren Herausdrehen des Gewindebolzens (4) zum Anheben des Einsatzes (2) vom Herzstückgrundkörper (3) führt, wobei der erste Gewindeabschnitt (6) zum Einschrauben in den Herzstückgrundkörper (3) und der zweite Gewindeabschnitt (7) für die Mutter (5) vorgesehen ist, wobei die Mutter (5) nach dem Aufsetzen des Einsatzes (2) auf den Herzstückgrundkörper (3) von oben durch eine Bohrung (8) im Einsatz (2) auf den den Einsatz (2) teilweise durchsetzenden zweiten Gewindeabschnitt (7) aufschraubbar ist, um den Einsatz (2) gegenüber dem Herzstückgrundkörper (3) zu verspannen, wobei der obere Angriffsabschnitt (19) für ein Werkzeug zum Herausschrauben des Gewindebolzens (4) und zum Anheben des Einsatzes (2) gegenüber dem Herzstückgrundkörper (3) vorgesehen ist und wobei die Mutter (5) den oberen Angriffsabschnitt (19) nach dem Aufschrauben auf den zweiten Gewindeabschnitt (7) nach oben vollflächig überdeckt.

2. Verbindungselement nach Anspruch 1, **dadurch gekennzeichnet, dass** der obere Angriffsabschnitt (19) an dem zweiten Gewindeabschnitt (7) durch Aufbohren der Mutter (5) auf der außenliegenden Stirnseite (14) zugänglich ist.

3. Verbindungselement nach einem der vorhergehenden Ansprüche 1 oder 2, **dadurch gekennzeichnet, dass** der Angriffsabschnitt (15) der Mutter (5) durch Abbrechen oder durch zerspanende Bearbeitung von der Mutter (5) abtrennbar ist oder dass der Angriffsabschnitt (15) mit der Mutter (5) verschraubt ist.

4. Verbindungselement nach einem der vorhergehenden Ansprüche 1 bis 3, **dadurch gekennzeichnet, dass** der Angriffsabschnitt (15) durch einen Fortsatz an der außenliegenden Stirnfläche (16) der Mutter (5) gebildet wird.

5. Anordnung mit einem über ein Verbindungselement nach einem der vorhergehenden Ansprüche 1 bis 4 an einem Herzstückgrundkörper (3) eines Weichenherzstücks befestigten Einsatz (2), wobei das Verbindungselement zur Befestigung des Einsatzes (2) in dem Weichenherzstück ausgebildet ist, **dadurch gekennzeichnet, dass** der Gewindebolzen (4) die Bohrung (8) im verspannten Befestigungszustand des Einsatzes (2) lediglich teilweise durchsetzt und die Mutter (5) in der Bohrung angeordnet ist und dass eine außenliegende Stirnfläche (16) der Mutter (5) im Befestigungszustand zumindest randseitig mit einer Außenfläche (18) des Einsatzes (2) ausgefluchtet ist.

## Claims

1. A connecting element for mounting an interchangeable insert (2) in a switch frog point, with a threaded bolt (4) comprising a first threaded section (6) on an end, a second threaded section (7) on the other end with an upper engaging section (19), and a nut (5) with an engaging section (15) on an exterior front side (14) for a tool for screwing on the second threaded section (7), **characterized in that** the connecting element is designed for lifting the insert (2), wherein the threaded bolt (4) has a lifting section (10) in the area between the threaded sections (6, 7), wherein the lifting section (10) for lifting the insert (2) is formed by unscrewing the threaded bolt (4) from the frog base body (3), wherein during the unscrewing of the threaded bolt (4) the lifting section (10) comes into contact on the threaded bolt (4) with a locating surface of the insert (2), so that a form closure is formed in the axial direction, which during a further unscrewing of the threaded bolt (4) leads to the lifting of the insert (2) from the frog base body (3), wherein the first threaded section (6) is provided for screwing into the frog base body (3) and the second threaded section (7) for the nut (5), wherein the nut (5) can be screwed on after putting the insert (2) on the frog base body (3) from above through a borehole (8) in the insert (2) on the second threaded section (7) partially pushing through the insert (2), in order to brace the insert (2) as against the frog base body (3), wherein the upper engaging section (19) is provided for a tool for unscrewing the threaded bolt (4) and for lifting the insert (2) in relation to the frog base body (3) and wherein the nut (5) completely overlaps the upper engaging section (19) upwards after the screwing onto the second threaded section (7).

2. A connecting element according to claim 1, **characterized in that** the upper engaging section (19) is accessible to the second threaded section (7) by boring out the nut (5) on the exterior front side (14).

3. A connecting element according to one of the preceding claims 1 or 2, **characterized in that** the engaging section (15) of the nut (5) is detachable from the nut (5) by dismantling or by machining or that the engaging section (15) is screwed together with the nut (5).

4. A connecting element according to one of the preceding claims 1 to 3, **characterized in that** the engaging section (15) is formed by an extension on the exterior front side (16) of the nut (5).

5. An arrangement with an insert (2) mounted via a connecting element according to one of the preceding claims 1 to 4 on a frog base body (3) of a switch frog point, wherein the connecting element is designed for mounting the insert (2) in the switch frog point, **characterized in that** the threaded bolt (4) pushes though the borehole (8) in the braced mounting condition of the insert (2) only partially and the nut (5) is arranged in the borehole and that an exterior front side (16) of the nut (5) in the mounting condition is aligned at least on the edge side with an external surface (18) of the insert (2).

## Revendications

1. Élément de liaison pour fixer un insert (2) dans un coeµr d'aiguillage, comportant un boulon fileté (4), muni d'un premier tronçon fileté (6) à une extrémité, d'un deuxième tronçon fileté (7) à l'autre extrémité avec un tronçon d'attaque (19) supérieur, et un écrou (5) avec un tronçon d'attaque (15) sur une face frontale (14) extérieure pour un outil permettant de visser ledit écrou sur le deuxième tronçon fileté (7), **caractérisé en ce que** ledit élément de liaison est réalisé pour soulever l'insert (2), le boulon fileté (4) comportant un tronçon de levage (10) dans la zone entre les tronçons filetés (6, 7), le tronçon de levage (10) étant réalisé pour soulever l'insert (2) sous l'effet du dévissage du boulon fileté (4) hors du corps de base (3) du coeur, pendant le dévissage du boulon fileté (4), le tronçon de levage (10) sur le boulon fileté (4) entrant en contact avec une surface de butée de l'insert (2), de telle sorte qu'il se forme, dans le sens axial, un assemblage par conjugaison de forme, qui, lorsqu'on continue à dévisser le boulon fileté (4), entraîne un soulèvement de l'insert (2) hors du corps de base (3) du coeur, le premier tronçon fileté (6) étant prévu pour être vissé dans le corps de base (3) du coeur et le deuxième tronçon fileté (7) étant prévu pour l'écrou (5), ledit écrou (5), après la pose de l'insert (2) sur le corps de base (3) du coeur, pouvant être vissé, à partir du haut à travers une forure (8) dans l'insert (2), sur le deuxième tronçon fileté (7) traversant partiellement l'insert (2), afin de bloquer l'insert (2) par rapport au corps de base (3) du coeur, le tronçon d'attaque (19) supérieur étant prévu pour un outil permettant de dévisser le boulon fileté (4) et de soulever l'insert (2) par rapport au corps de base (3) du coeur, et l'écrou (5) recouvrant totalement vers le haut le tronçon d'attaque (19) supérieur après le vissage sur le deuxième tronçon fileté (7).

2. Élément de liaison selon la revendication 1, **caractérisé en ce que** le tronçon d'attaque (19) supérieur sur le deuxième tronçon fileté (7) est accessible moyennant le perçage de l'écrou (5) sur la face frontale (14) extérieure.

3. Élément de liaison selon la revendication 1 ou 2, **caractérisé en ce que** le tronçon d'attaque (15) de l'écrou (5) peut être détaché de l'écrou (5) par rupture ou par un usinage par enlèvement de copeaux, ou **en ce que** le tronçon d'attaque (15) est vissé à l'écrou (5).

4. Élément de liaison selon l'une quelconque des revendications 1 à 3, **caractérisé en ce que** le tronçon d'attaque (15) est formé par une saillie sur la face frontale (16) extérieure de l'écrou (5).

5. Ensemble comportant un insert (2) fixé par l'intermédiaire d'un élément de liaison selon l'une quelconque des revendications 1 à 4, sur un corps de base (3) d'un coeur d'aiguillage, ledit élément de liaison étant réalisé pour la fixation de l'insert (2) dans le coeur d'aiguillage, **caractérisé en ce que**, dans la position de fixation bloquée de l'insert (2), le boulon fileté (4) passe seulement partiellement à travers la forure (8) et l'écrou (5) est disposé dans la forure, et **en ce que**, dans la position de fixation, une face frontale (16) extérieure de l'écrou (5) est alignée, au moins du côté du bord, avec une surface extérieure (18) de l'insert (2).
